# EUROPEAN PATENT APPLICATION

(11) **EP 2 133 188 A1**
(43) Date of publication of application: **16.12.2009**
(21) Application number: 09161634.2
(22) Date of filing: 02.06.2009
(51) Int. Cl.: B29C 45/16, B29C 45/14

(54) **Injection molding apparatus and injection molding method**

(30) Priority: 10.06.2008 KR 20080054055
(71) Applicant: Samsung Electronics Co., Ltd., Suwon-si, Gyeonggi-do 442-742 (KR)
(72) Inventor: Lee, Dong Yul, Gyeonggi-do (KR); Song, Jun Gyu, Gyeonggi-do (KR)
(74) Representative: Land, Addick Adrianus Gosling

(57) **Abstract**

An injection molding system (10) includes an injection mold set (20) to form injection molded products (J) through repeated injection molding, and a printing device (30) to press a film (P) coated with colors onto an intermediate injection molded product to print the colors onto the intermediate injection molded product (J1). The intermediate injection molded product is printed with the colors coated onto the film to shorten a printing time and semipermanently conserve a printed figure. Further, even if the film is deviated slightly from a predetermined correct position, printing a desired figure correctly on the intermediate injection molded product is possible.

## Description

The present general inventive concept relates to an injection molding system and an injection molding method, and more particularly, to an injection molding system and an injection molding method, in which a printing time of an injection molded product is shortened and a printed shape is semipermanently conserved.

In general, injection molding systems are apparatuses, which mold a product having a desired shape by injecting a melt into a molding space formed in a shape of the product to be molded. Injection molding repeatedly produces injection molded products using the same mold set, and thus makes a mass production of the injection molded products possible and lowers a production cost of the products.

The injection molding is started from a closed state, in which upper and lower molds having corresponding shapes are closed. The closed state refers to a state in which the upper mold and the lower mold are engaged with each other and thus are closed. A melt is injected into the closed upper and lower molds through a runner, thus producing a desired injection molded product.

The injection molding includes a double injection molding method. The double injection molding method is an injection molded product obtained by putting a melt onto a first injection molded product, obtained by first injection molding, by second injection molding. When the double injection molding method is used, having one injection molded product using melts having different colors or materials is possible.

It is necessary to print various figures or characters on an injection molded product for decorative purposes or for the convenience of users.
In order to obtain an injection molded product through the conventional injection molding system, figures or characters are printed on a surface of the injection molded product by a separate printing process after an injection molding process has been completed. Thus, the printed surface of the injection molded product, which is exposed to the outside, is easily damaged by external stresses, such as friction.

In order to solve the above problem, there is proposed a method, in which a first injection molded product is taken out of a mold set after a first injection molding has been terminated, the surface of the first injection molded product is printed with figures or characters, and then the first injection molded product is put again into the mold set and second injection molding is carried out. Such a method requires considerable time during a process for stopping the first injection molding, printing the surface of the molded product, and then putting the injection molded product again into the mold set, and thus is inefficient.

The present general inventive concept provides an injection molding system and an injection molding method, in which the printing of an injection molded product is carried out with a film coated with colors to shorten a printing time and semipermanently conserve a printed figure.

Additional aspects and utilities of the present general inventive concept will be set forth in part in the description which follows and, in part, will be obvious from the description, or may be learned by practice of the general inventive concept.

The foregoing and/or other aspects and utilities of the general inventive concept may be achieved by providing an injection molding system including an injection mold set to form injection molded products through repeated injection molding, and a printing device to press a film coated with colors onto an intermediate injection molded product to print the colors onto the intermediate injection molded product.

The printing device may include a film supply unit to supply the film to a printing position of the intermediate injection molded product, and a film pressing unit to press the film onto the intermediate injection molded product to print a figure according to the colors onto the intermediate injection molded product.

The film pressing unit may include a stamper, on which the reversed figure is engraved, provided on a portion of the film pressing unit to contact the film, and a stamper transfer member to press the stamper onto the intermediate injection molded product.

The printing device may further include a transfer unit to transfer the printing device to the printing position.

The film supply unit may continuously supply the film, which is rolled, to the printing position.

The injection mold set may include lower molds, and first and second upper molds sequentially closed to the lower molds to form the injection molded products.

Any one injection molding out of the repeated injection molding may be carried out by injecting a melt of a transparent material into the injection mold set.

The foregoing and/or other aspects and utilities of the general inventive concept may also be achieved by providing an injection molding system including an injection mold set to form injection molded products through first injection molding and second injection molding, and a printing device to press a film coated with colors onto a first injection molded product, obtained by the first injection molding, on a condition that the first injection molded product is located on the injection mold set, to print the colors onto the first injection molded product.

The printing device may include a film supply unit supplying the film, which is rolled, to a printing position, and a film pressing unit pressing the film located at the printing position onto the first injection molded product.

The film pressing unit may include a stamper, on which a reversed designated figure is engraved such that the figure can be printed on the first injection molded product, contacting the film, and a stamper transfer member pressing the stamper onto the first injection molded product.

Any one injection molded product out of the first and second injection molded products may be made of a transparent material.

The foregoing and/or other aspects and utilities of the general inventive concept may also be achieved by providing an injection molding method including firstly injection-molding a melt into a first injection molded product by injecting a mold into an injection mold set in a closed state, locating a printing device at a printing position of the first injection molded product on the injection mold set in an opened state, printing a color on the first injection molded product by supplying a film coated with colors to the first injection molded product, and secondly injection-molding a melt into a second injection molded product by supplying the melt onto the first injection molded product printed with the color in the injection mold set in the closed state.

The printing of the color on the first injection molded product may include winding the film coated with colors to locate a portion of the film coated with another color at the printing position.

In the firstly injection-molding, the melt of a transparent material may be injected into the injection mold set in the closed state such that the printed color can be seen outside of the second injection molded product.

The foregoing and/or other aspects and utilities of the general inventive concept may also be achieved by providing an injection molding system including a first upper mold and a first lower mold to perform a first injection molding operation to form a first injection molded product; a second upper mold and a second lower mold to perform a second injection molding operation to form a second injection molded product; and a printing device to print on the first injection molded product on a condition that the first injection molded product is located on the first lower mold between the first and second injection molding operations.

The printing device may print on the first injection molded product by pressing a film coated with colors onto the first injection molded product.

The first injection molded product may include a transparent material.

The second injection molded product may include an opaque material.

The foregoing and/or other aspects and utilities of the general inventive concept may also be achieved by providing an injection molding method including performing a first injection molding operation to form a first injection molded product by injecting a mold to an injection mold set; performing a second injection molding operation to form a second injection molded product by rotating the injection mold set and injecting a mold to the injection mold set; and printing on the first injection molded product on a condition that the first injection molded product is located on the injection mold set between the first and second injection molding operations.

These and/or other aspects and utilities of the present general inventive concept will become apparent and more readily appreciated from the following description of the embodiments, taken in conjunction with the accompanying drawings in which:
FIG. 1 is a perspective view illustrating an injection molding system in accordance with an embodiment of the present general inventive concept;
FIG. 2 is a view partially illustrating a stamper and a film of a printing device of FIG. 1;
FIGS. 3 to 5 are views illustrating an injection molding process using the injection molding system of FIG. 1;
FIG. 6 is a partially exploded perspective view of an injection molded product obtained by the injection molding system of FIG. 1; and
FIG. 7 is a flowchart illustrating an injection molding method according to an embodiment of the present general inventive concept.

Reference will now be made in detail to embodiments of the present general inventive concept, an example of which is illustrated in the accompanying drawings, wherein like reference numerals refer to like elements throughout. The embodiments are described below to explain the present general inventive concept by referring to the annexed drawings.

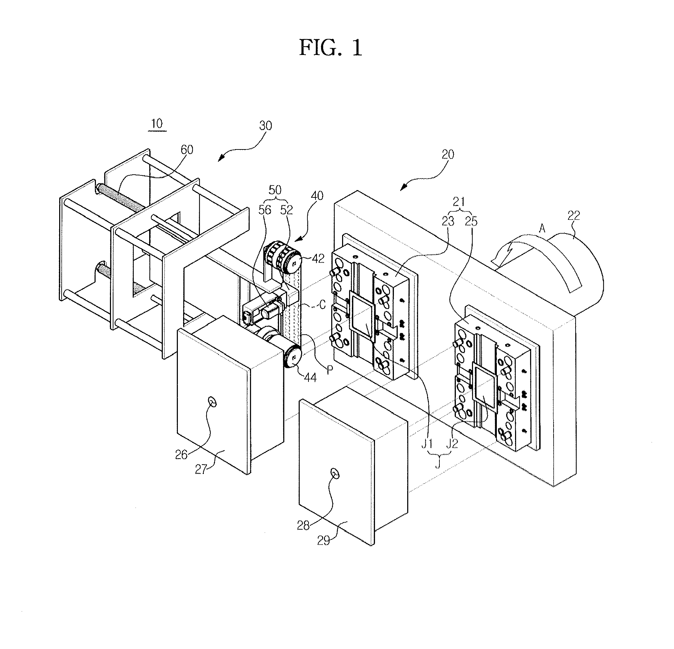

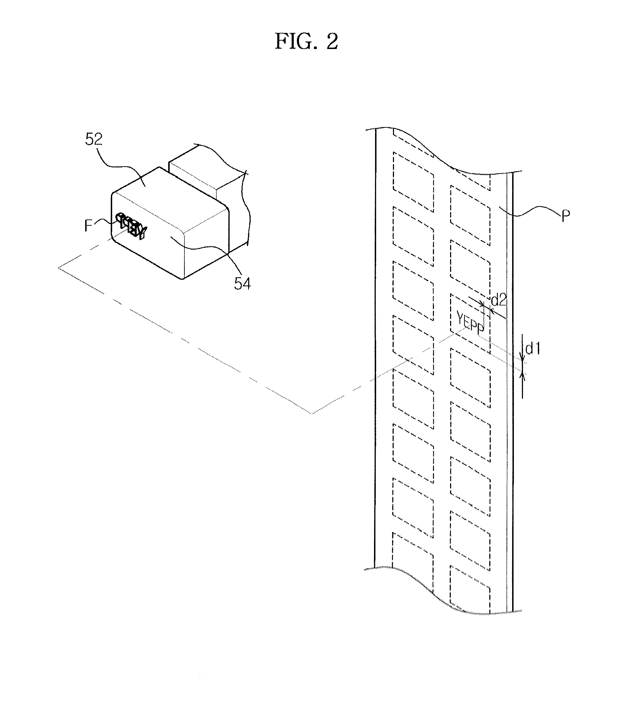

FIG. 1 is a perspective view illustrating an injection molding system in accordance with an embodiment of the present general inventive concept, and FIG. 2 is a view partially illustrating a stamper and a film of a printing device of FIG. 1.

As illustrated in FIGS. 1 and 2, an injection molding system 10 in accordance with an embodiment of the present general inventive concept includes an injection mold set 20, and a printing device 30, which prints an injection molded product J located on the injection mold set 20.

Molding spaces, in which double injection molding is performed, are formed in the mold set 20. The molding spaces are gaps respectively provided between lower molds 21 and upper molds 27 and 29 when the lower molds 23 and 25 and the upper molds 27 and 29 are closed. When a melt, such as molten plastic, is supplied to the molding spaces through first and seconds runners 26 and 28, injection molded products J are formed. Now, a process to form the injection molded products J by an operation of the injection mold set 20 will be described in detail. The first upper mold 27 contacts the first lower mold 23 such that the first upper and lower molds 27 and 23 are closed. The melt is injected into the molding space formed between the closed upper and lower molds 27 and 23 through the first runner 26. When a temperature of the injected melt is lowered and thus the melt is solidified, the first upper mold 27 moves back such that a contact between the first upper and lower molds 27 and 23 is released. This state is referred to as an opened state. A first injection molded product J1 obtained by first injection molding is located on the first lower mold 23. On a condition that the first injection molded product J1 is located on the first lower mold 23, the injection mold set 20 is rotated on the rotary shaft 22 at an angle of 180° in a clockwise direction A. When the injection mold set 20 is rotated, the first lower mold 23 becomes located under the second upper mold 29. When the first lower mold 23 is located under the second upper mold 29, the first lower mold 23 and the second upper mold 29 are closed, and a melt is injected into the molding space between the closed first lower mold 23 and second upper mold 29 through the second runner 28. When the temperature of the injected melt is lowered and thus the melt is solidified, the second upper mold 29 moves back such that a contact between the second upper mold 29 and the first lower mold 23 is released. An injection molded product J, obtained by coating the first injection molded product J1 with a second injection molded product J2, is located on the first lower mold 23. After the injection molded product J is separated from the first lower mold 23, the injection mold set 20 is rotated at an angle of 180° in the clockwise direction A, and then a new injection molding process is continuously carried out. That is, when the injection mold set 20 is closed one time, the first upper mold 27 performs first injection molding and the second upper mold 29 performs second injection molding. Before the injection mold set 20 is rotated after the first injection molding has been terminated, the printing device 30 performs printing of the surface of the first injection molded product J1.

The printing device 30 performs printing of the first injection molded product J1 by a method of pressing a film P coated with a color onto the first injection molded product J1. The printing device 30 is on standby at an outside of the injection mold set 20, while the injection mold set 20 is closed to perform injection molding. Then, when the injection mold set 20 is opened, the printing device 30, which was on standby at the outside of the injection mold set 20, moves close to the first lower mold 23 of the injection mold set 20. The first injection molded product J1, obtained by first injection molding, is located on the first lower mold 23. The first injection molded product J1 corresponds to an upper surface of the finished injection molded product J, and may be made of a transparent material for an aesthetic external appearance of the injection molded product J. The printing device 30 prints on an inner surface of the first injection molded product J1 made of a transparent material with a figure F. The printing device 30 includes the film P coated with colors, a film supply unit 40, a film pressing unit 50, and a transfer unit 60.

The film P may be wound in a roll shape. Although this embodiment describes the film P wound in a roll shape, films P, each having a shape of a piece of paper, may be supplied one by one. Color regions C are provided on the film P.

The color regions C are coated with a pigment. The pigment coated on the color regions C is solidified, and thus does not flow outside of the color regions or does not stain other portions of the film P in a rolled state. The pigment coated on the color regions C is adhered and printed onto the first injection molded product J1, when the film P is pressed onto the first injection molded product J1. The pigment coated on the color regions C may have different colors according to the respective color regions C. The color regions C are provided on one surface out of both surfaces of the film P, which is close to the first injection molded product J1. Thus, when the film P is pressed onto the first injection molded product J1, the pigment on one color region C directly contacting the first injection molded product J1 is adhered to the first injection molded product J1. When one color region C is pressed onto the first injection molded product J1, the pigment coated on the color region C is printed onto the first injection molded product J1. Accordingly, the film supply unit 40 is operated, and thus winds or unwinds the film P such that a new color region C is located at a printing position.

The film supply unit 40 continuously supplies the rolled film P to the printing position. As described above, the film P of this embodiment has an extended shape in the lengthwise direction. In order to contain the film P, which is extended in a lengthwise direction, in a narrow space, the film P is rolled and contained in the printing device 30. The film supply unit 40 includes first and second rollers 42 and 44.

The first and second rollers 42 and 44 have a cylindrical shape. The film P is rolled on outer circumferential surfaces of the cylindrical first and second rollers 42 and 44. When a printing process using a specific color region C has been completed, the first and second rollers 42 and 44 are rotated in the clockwise or counterclockwise direction. When the first and second rollers 42 and 44 are rotated, the film P rolled on the first and second rollers 42 and 44 is wound or unwound.
When the film P is wound or unwound, a new color region C is located at the printing position and a subsequent printing process is prepared. When the new color region C is located at the printing position, the film pressing unit 50 presses the film P.

The film pressing unit 50 causes the color coated on the color region C to contact the first injection molded product J1. When the injection mold set 20 is opened, an end portion of the printing device 30, i.e., the film pressing unit 50, enters an inside of the opened injection mold set 20 by the transfer unit 60. The film pressing unit 50 that entered the inside of the opened injection mold set 20 is located at the printing position above the first injection molded product J1. When the film pressing unit 50 is located at the printing position, the color region C on the film P contacts the first injection molded product J1 by a stamper 52 and a stamper transfer member 56, and allows pigment to be printed on the first injection molded product J1.

The stamper 52 is a portion of the film pressing unit 50, which contacts the film P. A heating device (not illustrated) is provided in the stamper 52, and thus heats the stamper 52 to a designated temperature or more. When the heated stamper 52 contacts the first injection molded product J1 by the stamper transfer member 56, the stamper 52 melts the pigment coated on the color region C such that the pigment is attached to the first injection molded product J1. That is, the pigment on the color region C is printed on the first injection molded product J1 by the pressure applied by the stamper transfer member 56 and the heat transmitted from the heated stamper 52. A designated figure F is provided on a front surface portion 54 of the stamper 42.

The figure F to be printed is engraved in relief or intaglio on the front surface portion 54. At least one figure F is provided on the front surface portion 54, and the position of the stamper 52 may be slightly adjusted to print the necessary figure F onto the first injection molded product J1. The front surface portion 54 is exactly transferred to the printing position by a control signal generated from a control unit (not illustrated). Alternatively, the film P generates a small position error during a process of applying the color regions C onto the film P, and generates a position error during a process of transferring the film P by the first and second rollers 42 and 44. Further, there may be a method, in which a figure or a character to be printed is provided on the film P and the figure or the character provided on the film P is printed directly onto the injection molded product J.
However, in this method, when the film P is deviated from a correct position, the figure or the character to be printed is deviated from a correct position and thus generates defective products. Alternatively, in the printing method in this embodiment, the film P only provides the color regions C, and the front surface portion 54, on which the figure F to be printed is engraved in relief or intaglio, is transferred to print the figure F on the first injection molded product J1. Thus, position accuracy is increased and defective products due to an error in the printing position are reduced. That is, even if the film P is deviated from a correct position within a range of a vertical margin d1 and a horizontal margin d2, the desired shape F can be printed onto a correct position of the first injection molded product J1.

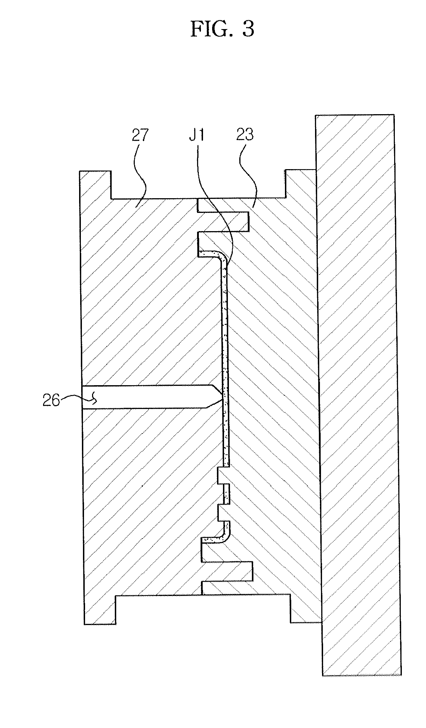

Hereinafter, with reference to FIGS. 3 to 5, an injection molding method in accordance with an embodiment will be described.

FIGS. 3 to 5 are views illustrating an injection molding process using the injection molding system of FIG. 1.

As illustrated in FIG. 3, after the first lower mold 23 and the first upper mold 27 are closed, a melt is injected into the molding space between the first upper and lower molds 27 and 23 through the first runner 26. Although a melt of a transparent material may be injected into the molding space in first injection molding or second injection molding, the melt of the transparent material may be, for example, injected into the molding space in first injection molding. The melt is injected into the molding space between the first upper and lower molds 27 and 23 through the first runner 26, and thus produces the first injection molded product J1. When the first injection molded product J1 is obtained, the first upper injection mold 27 is opened from the first lower injection mold 23. When the first upper injection mold 27 is opened from the first lower injection mold 23, the printing device 30 enters the inside of the injection mold set 20 at a position above the first injection molded product J1.

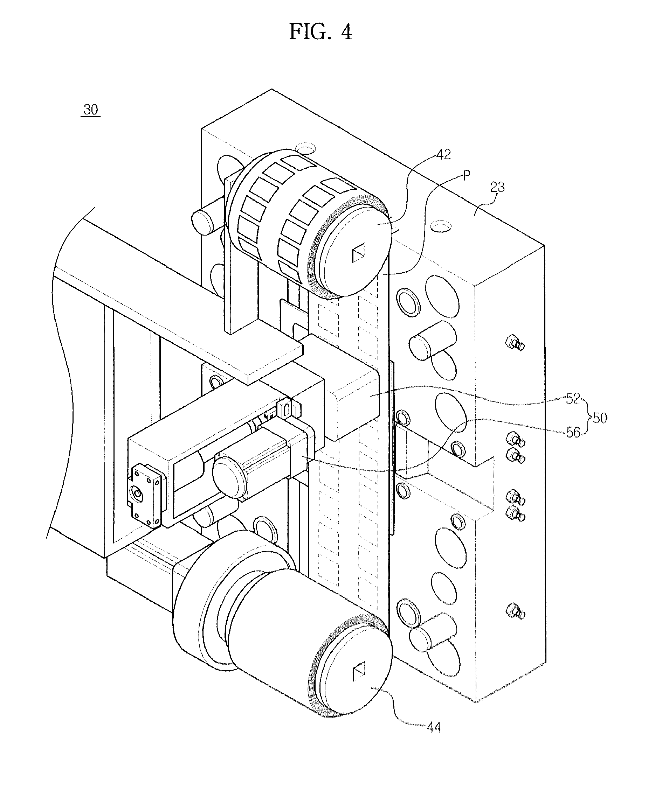

As illustrated in FIG. 4, the printing device 30 enters the inside of the injection mold set 20 such that the film pressing unit 50 is located at the printing position. When the film pressing unit 50 is transferred to the printing position above the first lower mold 23, the stamper transfer member 56 is operated and presses the stamper 52 onto the film P. The stamper 52 is strongly pressed onto the film P and transfers heat generated from the heating device (not illustrated) provided in the stamper 52 to the film P, simultaneously. When pressure and heat are transferred to the pigment coating the color region C on the film P, the pigment is printed onto the surface of the first injection molded product (J1 of FIG. 3). Since the printing on the first injection molded product (J1 of FIG. 3) is performed on a condition that the first injection molded product (J1 of FIG. 3) is located on the first lower mold 23, any separate process, such as a process to locate again the first injection molded product (J1 of FIG. 3) on the first lower mold 23 after the separation of the first injection molded product (J1 of FIG. 3) from the first lower mold 23, is not required and thus the printing process is rapidly performed. When the printing process has been completed one time, the first and second rollers 42 and 44 are driven such that the film P is wound or unwound, and thus, another unused color region C is located at the printing position, and then a next printing process is performed. When the printing on the first injection molded product (J1 of FIG. 3) has been completed, the printing device 30 is taken out of the first lower mold 23, and then second injection molding is carried out.

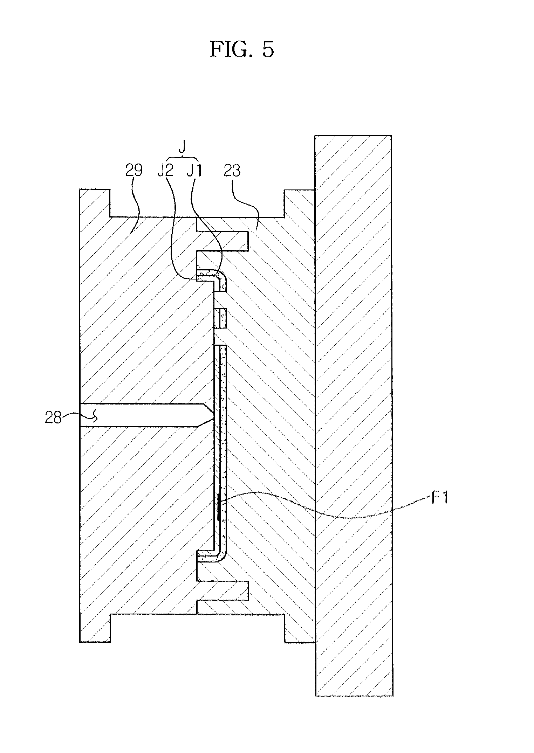

As illustrated in FIG. 5, after the first lower mold 23 and the second upper mold 29 are closed, a melt is injected into the molding space between the first lower mold 23 and the second upper mold 29 through the second runner 28. The melt injected through the second runner 28 covers one surface of the first injection molded product J1. The melt through the second injection molding covers one surface of the first injection molded product J1 and covers the printed figure F1 on the surface of the first injection molded product J1, simultaneously. Thereby, the printed figure F1 is not exposed to the outside, and preventing the printed figure F1 from being damaged by external stresses, such as friction, is possible.

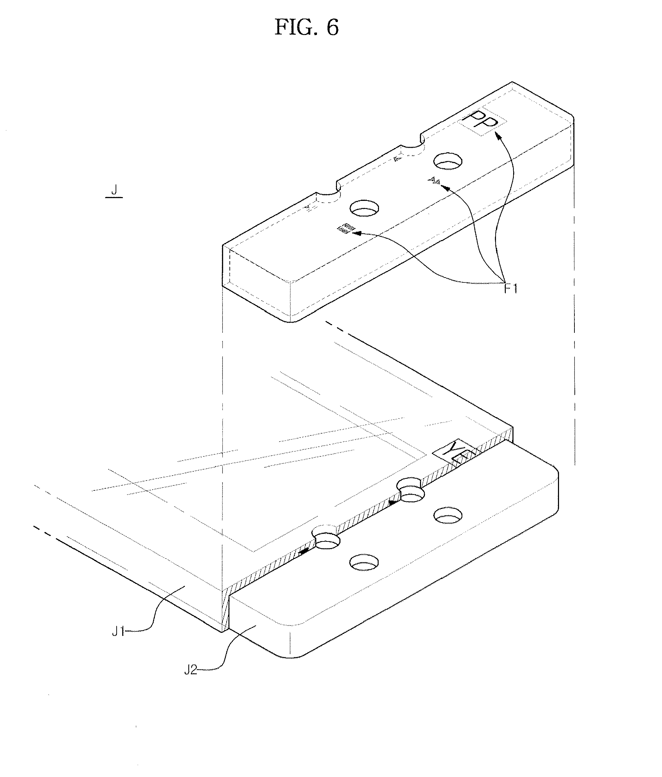

FIG. 6 is a partially exploded perspective view of an injection molded product obtained by the injection molding system of FIG. 1.

As illustrated in FIG. 6, the injection molded product J is obtained by double injection molding including a first injection molding process to produce a first injection molded product J1 made of a transparent material and a second injection molding process to produce a second injection molded product J2 made of an opaque material. The printed figure F is printed on the surface of the first injection molded product J1 contacting the second injection molded product J2. The printed figure F may have various colors and sizes, and one printed figure F may be expressed in various colors. For convenience of understanding, FIG. 6 illustrates a partially exploded first injection molded product J1. Unless the injection molded product J is damaged, the printed figure F1 is not exposed to the outside and thus is not damaged.

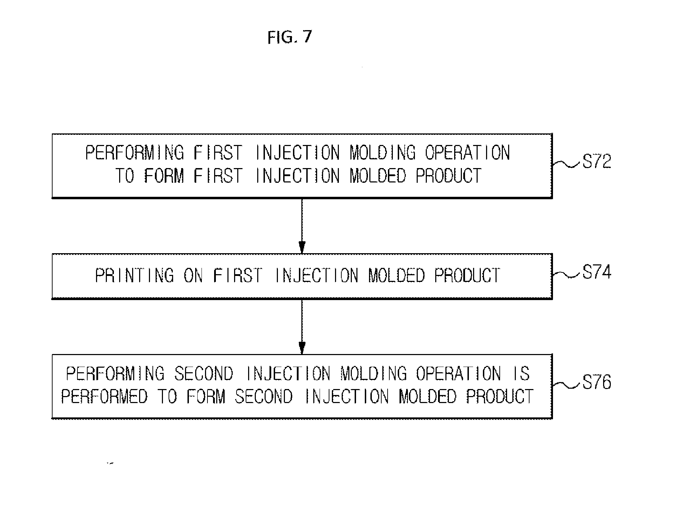

FIG. 7 is a flowchart illustrating an injection molding method according to an embodiment of the present general inventive concept. Referring to FIGS. 1 and 7, in operation S72, a first injection molding operation is performed to form a first injection molded product J1. In operation S74, the first injection molded product is printed on. In operation S76, a second injection molding operation is performed to form a second injection molded product J2.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although the above embodiment describes the film, which is wound in a roll type and is continuously supplied, films, each having a shape of a piece of paper, may be supplied one by one, as described above.

Further, although the above embodiment describes the first injection molded product made of a transparent material and the second injection molded product made of an opaque material, the transparencies of the first and second injection molded products may be arbitrarily adjusted.

Moreover, although the above embodiment describes one stamper and one figure printed on the stamper, a plurality of stampers may be provided and several figures may be printed one time.

As apparent from the above description, the present general inventive concept provides an injection molding system and an injection molding method, in which the printing on an injection molded product is performed using a film coated with colors during an injection molding process to shorten a printing time, prevent a pigment from spreading, and omit additional time to solidify the pigment.

Further, in the injection molding system and method of the present general inventive concept, since a printing process is carried out between a first injection molding process and a second injection molding process, the printed surface is not exposed to the outside and thus preventing the printed figure from being damaged by external stresses, such as friction, is possible.

Moreover, in the injection molding system and method of the present general inventive concept, even if the film is deviated slightly from a predetermined correct position during a process of supplying the film, printing a desired figure onto the correct position on the first injection molded product is possible.

Although various embodiments of the present general inventive concept have been illustrated and described, it would be appreciated by those skilled in the art that changes may be made in these embodiments without departing from the principles and spirit of the general inventive concept, the scope of which is defined in the claims and their equivalents.

## Claims

1. An injection molding system, comprising:
an injection mold set to form injection molded products through repeated injection molding; and
a printing device to press a film coated with colors onto an intermediate injection molded product to print the colors onto the intermediate injection molded product.

2. An injection molding system, comprising:
an injection mold set to form injection molded products through first injection molding and second injection molding; and
a printing device to press a film coated with colors onto a first injection molded product, obtained by the first injection molding, on a condition that the first injection molded product is located on the injection mold set, to print the colors onto the first injection molded product.

3. The injection molding system according to claim 1 or 2, wherein the printing device comprises:
a film supply unit to supply the film; and
a film pressing unit to press the film onto the injection molded product.

4. The injection molding system according to claim 1, 2 or 3, wherein the film pressing unit comprises:
a stamper, on which a reversed designated figure is engraved; and
a stamper transfer member to press the stamper onto the first intermediate injection molded product.

5. The injection molding system according to claim 2, 3 or 4, wherein the printing device further comprises:
a transfer unit to transfer the printing device to the printing position.

6. The injection molding system according to Any of claims 2-5, wherein the film supply unit continuously supplies the film, which is rolled, to the printing position.

7. The injection molding system according to any of claims 1-6, wherein the injection mold set includes lower molds, and first and second upper molds sequentially closed to the lower molds to form the injection molded products.

8. The injection molding system according to any of claims 1-7, wherein any one injection molding out of the repeated injection molding is carried out by injecting a melt of a transparent material into the injection mold set.

9. An injection molding method, comprising:
firstly injection-molding a melt into a first injection molded product by injecting a mold into an injection mold set in a closed state;
locating a printing device at a printing position of the first injection molded product on the injection mold set in an opened state;
printing a color on the first injection molded product by supplying a film coated with colors to the first injection molded product; and
secondly injection-molding a melt into a second injection molded product by supplying the melt onto the first injection molded product printed with the color in the injection mold set in the closed state.

10. The injection molding method according to claim 9, wherein the printing of the color on the first injection molded product includes winding the film coated with colors to locate a portion of the film coated with another color at the printing position.

11. The injection molding method according to claim 9, wherein in the firstly injection-molding, the melt of a transparent material is injected into the injection mold set in the closed state such that the printed color can be seen outside of the second injection molded product.

12. An injection molding system, comprising:
a first upper mold and a first lower mold to perform a first injection molding operation to form a first injection molded product;
a second upper mold and a second lower mold to perform a second injection molding operation to form a second injection molded product; and
a printing device to print on the first injection molded product on a condition that the first injection molded product is located on the first lower mold between the first and second injection molding operations.

13. The system according to claim 12, wherein the printing device prints on the first injection molded product by pressing a film coated with colors onto the first injection molded product.

14. The system according to claim 12, wherein the second injection molded product comprises:
an opaque material.

15. An injection molding method, comprising:
performing a first injection molding operation to form a first injection molded product by injecting a mold to an injection mold set;
performing a second injection molding operation to form a second injection molded product by rotating the injection mold set and injecting a mold to the injection mold set; and
printing on the first injection molded product on a condition that the first injection molded product is located on the injection mold set between the first and second injection molding operations.
